# EUROPÄISCHE PATENTANMELDUNG

(11) **EP 2 259 026 A2**
(43) Veröffentlichungstag der Anmeldung: **08.12.2010**
(21) Anmeldenummer: 10004840.4
(22) Anmeldetag: 07.05.2010
(51) Int. Cl.: G01D 5/56, G01D 5/58

(54) **Tretlager mit einer Kurbelwelle und einer Sensorvorrichtung**

(30) Priorität: 15.05.2009 DE 102009021541
(71) Anmelder: Schaeffler Technologies GmbH & Co. KG, 91074 Herzogenaurach (DE)
(72) Erfinder: Benkert, Frank, 97534 Waigolshausen (DE); Schilling, Claus-Dieter, 97516 Oberschwarzbach (DE)

(57) **Zusammenfassung**

Die Erfindung betrifft ein Tretlager, umfassend eine drehbar gelagerte Kurbelwelle (2), und eine Sensorvorrichtung (3), die die Position der Kurbelwelle (2), insbesondere den Winkel der Kurbelwelle (2), erfasst, wobei die Sensorvorrichtung (3) einen Sensor (7) und einen Signalgeber (8) umfasst. Die Aufgabe, für ein Tretlager, insbesondere für eine Kurbelwelle eines Tretlagers einen einfachen und stabilen Signalgeber für die Sensorvorrichtung anzugeben, wird erfindungsgemäß dadurch gelöst, dass der Signalgeber (8) einen drehfest an dem Korpus der Kurbelwelle (2) befestigten Lagerkäfig (9) eines Wälzlagers, insbesondere einen Lagerkäfig (9) eines Nadellagers, umfasst. Die Erfindung betrifft weiter eine Kurbelwelle für ein Tretlager.

## Beschreibung

### Gebiet der Erfindung

Die Erfindung betrifft ein Tretlager nach dem Oberbegriff von Anspruch 1 sowie eine Kurbelwelle nach Anspruch 4.

Aus der Praxis sind Tretlager mit einer um ihre Achse drehbar gelagerten Kurbelwelle bekannt, wobei das Tretlager eine Sensorvorrichtung umfasst, die die Drehung der Kurbelwelle erfasst, insbesondere die Position der Welle bzw. den Drehwinkel der Welle bezogen auf einen Referenzpunkt. Hierbei entsteht die Forderung, die Sensorvorrichtung, insbesondere den Signalgeber der Sensorvorrichtung, mechanisch stabil und von außen unsichtbar anzubringen.

Aus der Praxis ist bekannt, an einem mit der Kurbelwelle drehfest verbundenen Kettenblatt einen Permanentmagneten als Signalgeber anzuordnen und an einem Rahmen des Gehäuses einen magnetischen Sensor anzuordnen. Der Permanentmagnet läuft mit der Drehzahl der Welle um und liefert in dem magnetischen Sensor ein periodisches elektrisches Signal. Nachteilig ist, dass an dem Kettenblatt wenig Bauraum zur Verfügung steht, so dass der magnetische Sensor nahe an dem Kettenblatt angeordnet sein muss und Störeinflüssen unterliegt. Nachteilig ist ferner, dass die Sensorvorrichtung als solche von außen erkennbar ist. Ungünstig ist weiter, dass die Position des Signalgebers zu dem Sensor veränderlich ist, beispielsweise wenn Fahrrad mit dem Tretlager umkippt und die Kurbelwelle mit dem Permanentmagneten entlang der Achse der Kurbelwelle eine Verschiebung relativ zu dem Sensor erfährt.

DE 296 11 344 U1 und DE 94 15162 U1 beschreiben jeweils ein Tretlager mit einer Kurbelwelle und einer Sensorvorrichtung, die eine Drehung der Kurbelwelle erfasst, wobei die Sensorvorrichtung einen als Reed-Sensor ausgebildeten magnetischen Sensor, der drehfest an der Kurbelwelle angeordnet ist, und einen an dem Rahmen fest angeordneten Permanentmagneten, der der Signalgeber des Sensors aufweist.

DE 295 07 357 U1 beschreibt ein Tretlager mit einer Kurbelwelle und einer Sensorvorrichtung, wobei die Sensorvorrichtung eine Anordnung von Infrarot-Dioden umfasst, die die Position, insbesondere den Drehwinkel der Kurbelwelle bei der Drehung der Kurbelwelle um die Achse erfassen.

### Aufgabe der Erfindung

Es ist die Aufgabe der Erfindung, für ein Tretlager, insbesondere für eine Kurbelwelle eines Tretlagers einen einfachen und stabilen Signalgeber für die Sensorvorrichtung anzugeben.

### Zusammenfassung der Erfindung

Diese Aufgabe wird erfindungsgemäß für ein Tretlager nach Anspruch 1 durch eine Kurbelwelle nach Anspruch 4 bei Verwendung nach Anspruch 7 eines Lagerkäfigs eines Wälzlagers, insbesondere eines Lagerkäfigs eines Nadellagers, als Signalgeber zur Erfassung der Drehung einer Welle, insbesondere des Drehwinkels der Kurbelwelle des Tretlagers, gelöst.

Der Lagerkäfig weist ein Korpus mit einer unterbrochenen, umlaufenden Mantelfläche auf, wobei die Unterbrechungen der Mantelfläche als radial von der Welle, insbesondere der Kurbelwelle, abstehende Vorsprünge wirken, deren Umlaufen bei der Drehung der Welle, insbesondere der Kurbelwelle, von dem Sensor erfasst wird, wobei der Lagerkäfig mit dem Korpus der Welle, insbesondere der Kurbelwelle, drehfest verbunden ist.

Bei einer Kurbelwelle kann der Lagerkäfig beabstandet von den Kurbel und von den Kettenblättern angeordnet werden, so dass das Vorhandensein des Signalgebers der Sensorvorrichtung von außen nicht erkennbar ist. Der Lagerkäfig ist preiswert und in zahlreichen Varianten verfügbar.

Der Lagerkäfig weist als abschnittsweise von Taschen unterbrochenes Bauteil ein nur geringeres Trägheitsmoment auf und beeinflusst die Funktion der Kurbelwelle nur wenig.

Vorzugsweise ist hinsichtlich der Ausbildung der Kurbelwelle bzw. des Tretlagers vorgesehen, dass der Lagerkäfig mit einem Seitenring an dem Korpus der Kurbelwelle befestigt ist. Die Befestigung kann mittels eines Presssitzes, eines Aufschrumpfens auf das Korpus der Welle oder mittels einer Klebelage ausgestaltet sein.

Vorzugsweise ist hinsichtlich der Ausbildung der Kurbelwelle bzw. des Tretlagers vorgesehen, dass der Lagerkäfig Stege aufweist, und dass die Stege einen radialen Abstand zu einer Mantelfläche des Korpus der Kurbelwelle aufweisen. Die Stege ermöglichen eine leichtbauende Ausgestaltung des Signalgebers. Der radiale Abstand der Stege zu der Mantelfläche des Korpus der Kurbelwelle ermöglicht einen geringen Abstand zu dem Sensor und verbessert die Empfindlichkeit des Sensors.

Vorzugsweise ist für den Sensor der Sensorvorrichtung des Tretlagers vorgesehen, dass der Sensor als magnetischer Sensor, insbesondere als Hall- oder Reed-Sensor, ausgebildet ist. Hierbei wird der Umstand ausgenutzt, dass viele Lagerkäfige aus einem ferromagnetischen Material, beispielsweise aus einem Wälzlagerstahl wie 100Cr6, ausgebildet sind, die gegenüber dem im allgemeinen unmagnetischen Material des Korpus der Kurbelwelle einen leicht erfassbaren magnetischen Kontrast ausbilden.

Vorzugsweise ist hinsichtlich der Ausgestaltung des Sensors als magnetischer Sensor vorgesehen, dass der magnetische Sensor magnetisch vorgespannt ist. Hierzu ist beispielsweise der magnetische Sensor in einem Magnetfeld eines Hilfsmagneten angeordnet, so dass sich dem Magnetfeld des Hilfsmagneten das durch den Lagerkäfig beeinflusste Magnetfeld überlagert ist. Die magnetische Vorspannung bewirkt dabei, dass magnetische Störfelder das von dem Sensor erfasste Magnetfeld nur wenig beeinflussen.

Weitere Vorteile und Merkmale ergeben sich aus den abhängigen Ansprüchen sowie aus der Beschreibung eines bevorzugten Ausführungsbeispiels.

Die Erfindung wird im folgenden unter Bezugnahme auf die anliegenden Zeichnungen anhand eines Ausführungsbeispiels näher beschrieben und erläutert.

### Kurze Beschreibung der Zeichnungen

- Fig. 1: zeigt eine teilweise geschnittene Ansicht eines Ausführungs- beispiels eines erfindungsgemäßen Tretlagers mit einem Aus- führungsbeispiel einer erfindungsgemäßen Kurbelwelle, und
- Fig. 2: zeigt den Ausschnitt 'Z' aus Fig. 1 in einer vergrößerten An- sicht.

### Detaillierte Beschreibung der Zeichnungen

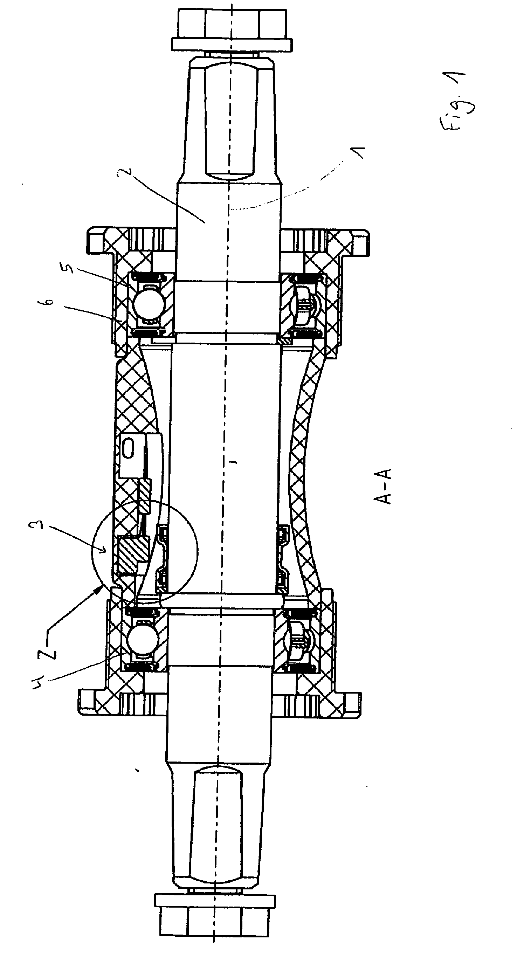

Fig. 1 zeigt ein Tretlager, das eine um eine Drehachse 1 drehbar gelagerte Kurbelwelle 2 und eine Sensorvorrichtung 3 umfasst. Die Kurbelwelle 2 ist mittels eines ersten Wälzlagers 4 und eines in Richtung der Drehachse 1 axial beabstandeten zweiten Wälzlagers 5 drehbar an einem ausschnittsweise dargestellten Rahmen 6 eines nicht weiter dargestellten Gehäuses 7 gelagert.

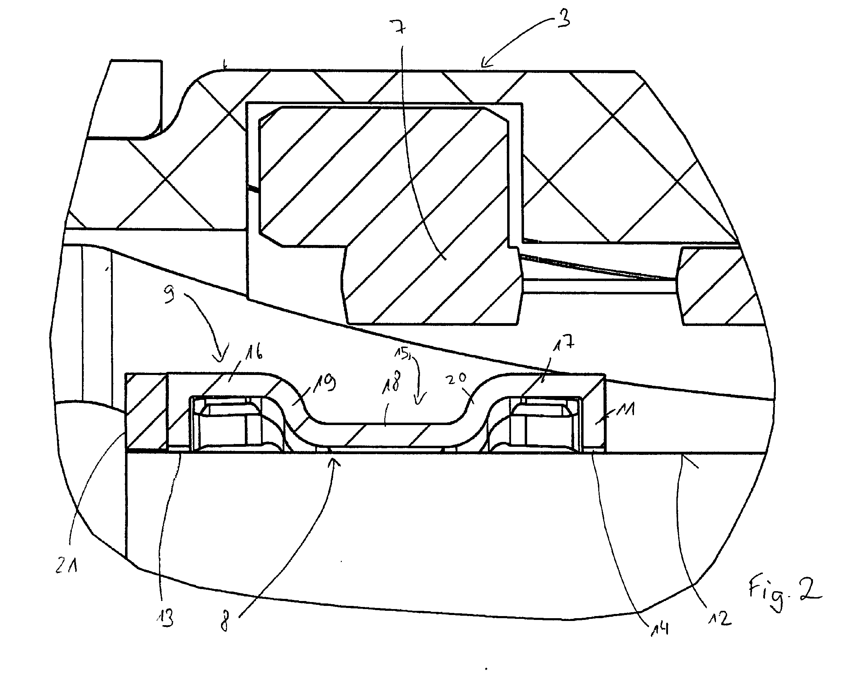

Fig. 2 zeigt die Sensorvorrichtung 3 in einer vergrößerten Darstellung. Die Sensorvorrichtung 3 umfasst einen Sensor 7 und einen Signalgeber 8, wobei der Signalgeber 8 drehfest an dem Korpus der Kurbelwelle 2 befestigt ist, so dass während der Drehung der Kurbelwelle 2 der Sensor 7 ein veränderliches Signal erfasst. Aus dem von dem Sensor 7 erfassten Signal kann insbesondere auf die Position der Kurbelwelle 2, speziell den Drehwinkel der Kurbelwelle 2 bezogen auf einen ausgezeichneten Referenzpunkt, geschlossen werden, so dass die Sensorvorrichtung 3 als Positionsgeber ausgestaltet ist.

Der Sensor 7 der Sensorvorrichtung 3 ist als magnetischer Sensor, insbesondere als Hall-Sensor, ausgebildet. Der Sensor 7 ist mittels eines Hilfsmagneten magnetisch vorgespannt und an dem Rahmen 6 befestigt. Der Signalgeber 8 der Sensorvorrichtung 3 umfasst einen drehfest an dem Korpus der Kurbelwelle 2 befestigten Lagerkäfig 9 eines Wälzlagers, nämlich einen Lagerkäfig 9 eines Nadellagers. Der Lagerkäfig 9 ist aus einem ferromagnetischen Material, nämlich einem Feinblech wie Wälzlagerstahl, speziell 100Cr6, ausgebildet. Der Lagerkäfig 9 weist einen ersten Seitenring 10 und einen zweiten Seitenring 11 auf, wobei die beiden Seitenringe 10, 11 axial beabstandet sind. Der Lagerkäfig 9 ist mit den beiden Seitenringen 10, 11 an einer äußeren Mantelfläche 12 des Korpus der Kurbelwelle 2 befestigt. Hierzu ist eine erste Klebelage 13 zwischen dem ersten Seitenring 10 bzw. eine zweite Klebelage 14 zwischen dem zweiten Seitenring 11 und der äußeren Mantelfläche 12 der Kurbelwelle 2 vorgesehen.

Der Lagerkäfig 9 weist zwischen den beiden Seitenringen 10, 11 insgesamt sechzehn Stege 15 auf, die entlang des Umfangs der Mantelfläche 12 der Kurbelwelle 2 einen gleichen Abstand voneinander einhalten. Je zwei in Umfangsrichtung benachbarte Stege 15 begrenzen eine Tasche, in der in der üblichen Verwendung des Lagerkäfigs 9 in einem Wälzlager ein Wälzkörper, insbesondere ein nadelförmiger Wälzkörper, aufgenommen ist.

Die Stege 15 weisen ein sogenanntes U-Profil auf und umfassen einen ersten axialen Abschnitt 16, einen zweiten axialen Abschnitt 17 und einen dritten axialen Abschnitt 18, wobei der dritte axiale Abschnitt 18 im wesentlichen mittig zwischen den beiden anderen axialen Abschnitten 16, 17 angeordnet ist. Der dritte axiale Abschnitt 18 weist einen geringeren radialen Abstand von der Mantelfläche 12 des Korpus der Kurbelwelle 2 auf als die beiden anderen axialen Abschnitte 16, 17, so dass der dritte axiale Abschnitt 18 zu der Mantelfläche 12 der Kurbelwelle 2 radial hin versetzt ist, bezogen auf die angrenzenden beiden axialen Abschnitte 16, 17. Die drei axialen Abschnitte 16, 17 und 18 sind im wesentlichen parallel zu der Drehachse 1 der Kurbelwelle 2 ausgerichtet und über Zwischenabschnitte 19, 20 miteinander verbunden. Der magnetische Sensor 7 ist radial außen, bezogen auf den dritten axialen Abschnitt 18, angeordnet, so dass der Sensor 7 auch das Magnetfeld der beiden Zwischenabschnitte 19, 20 sowie der beiden anderen axialen Abschnitte 16, 17 erfasst und insgesamt nur ein geringer Bauraum in radialer Richtung erforderlich ist.

Bei dem vorstehend beschriebenen Ausführungsbeispiel umfasste der Lagerkäfig 9 insgesamt sechzehn Stege 15. Es versteht sich, dass auch Lagerkäfige mit einer anderen Anzahl von Stegen vorgesehen sein können. Es versteht sich weiter, dass einzelne Stege nicht zu der Entstehung des in dem Sensor 7 erfassten Signals beitragen, beispielsweise, indem diese Stege entfernt sind. Der fehlende Steg bewirkt in dem Sensor 7 ein ausbleibendes Signal, das eine nachgeschaltete Elektronik erfassen und auswerten kann. Auf diese Weise lässt sich die Position der Welle relativ zu dem Sensor 7 erfassen, was bei einer Kurbelwelle insbesondere bei einer im wesentlichen konstanten Drehzahl interessant ist. Speziell zur Erfassung einer Drehrichtung der Welle, insbesondere der Kurbelwelle 2, kann vorgesehen sein, dass ausgehend von einem Lagerkäfig mit mindestens vier in Umfangsrichtung benachbarten Stegen beispielsweise der erste Stege sowie der dritte und vierte Stege entfernt sind und der zweite Steg belassen ist. Der Sensor erfasst dann, ob zuerst das den beiden fehlenden Stegen entsprechende Signal oder zuerst das dem einzelnen fehlenden Steg entsprechende Signal erfasst wird, um auf die Drehrichtung der Welle, speziell der Kurbelwelle 2, zu schließen. Es versteht sich dabei, dass auch eine andere Anzahl von Stegen entfernt sein kann. Es ist insbesondere ausreichend, dass die Abstände zwischen in Umfangsrichtung benachbarten Stegen unterschiedlich sind, um eine Erfassung der Drehrichtung zu ermöglichen. Es versteht sich weiter, dass sämtliche Stege belassen sein können, allerdings mindestens einer der Stege für den Sensor erfassbar ausgezeichnet sein kann, beispielsweise mit einer magnetischen Beschichtung versehen oder einer optisch stärker absorbierenden oder reflektierenden Schicht versehen sein kann.

Bei dem in Fig. 2 dargestellten Ausführungsbeispiel ist der erste Seitenring 10 des Lagerkäfigs 9 mittels einer Abstandsscheibe 21 zu einem Bord eines inneren Lagerrings des ersten Wälzlagers 4 axial beabstandet angeordnet. Es versteht sich, dass der Lagerkäfig 9 auch axial mittig zwischen den beiden Wälzlagern 4, 5 angeordnet sein kann.

Bei dem vorstehend beschriebenen Ausführungsbeispiel war der Lagerkäfig 9 über die beiden Seitenringe 10, 11 mittels der Klebelagen 13, 14 an der äußeren Mantelfläche 12 des Korpus der Kurbelwelle 2 befestigt. Es versteht sich, dass alternativ oder ergänzend zu den Klebelagen 13, 14 andere Ausbildungen der Befestigung des Lagerkäfigs vorgesehen sein können, beispielsweise ein Presssitz oder ein Aufschrumpfen des Lagerkäfigs 9. Es versteht sich ferner, dass der Lagerkäfig 9 auch im Bereich der Stege 15, insbesondere mit dem dritten axialen Abschnitt 18, an dem Korpus der Kurbelwelle 2 festgelegt sein kann.

Bei dem vorstehend beschriebenen Ausführungsbeispiel war der Sensor 7 ein Hall-Sensor. Es versteht sich, dass der Sensor 7 ebenfalls ein Reed-Schalter oder ein auf dem GMR (giant magnetoresistive effect) beruhender magnetischer Sensor sein kann. Es versteht sich weiter, dass der Sensor 7 auch als ein optischer oder akustischer Sensor ausgebildet sein kann, wobei der Sensor erfasst, ob ein auf die Mantelfläche 12 gerichteter optischer oder akustischer Strahl von der Mantelfläche 12 oder einem der Stege 15 reflektiert wird. Es versteht sich, dass der Sensor, speziell der Hall-Sensor 7, eine nachgeschaltete Elektronik aufweisen kann, die nicht nur die Stellung der Welle bzw. die Drehzahl der Welle, sondern auch die Drehrichtung der Welle erfasst. Speziell kann die Elektronik den zeitlichen Abstand zwischen aufeinanderfolgenden Impulsen des Sensors erfassen und auf die Drehrichtung der Welle, speziell der Tretlagerwelle, schließen. Die Elektronik kann insbesondere in den Sensor 7 baulich integriert sein.

Das oben beschriebene Ausführungsbeispiel zeigte die Verwendung des Lagerkäfigs 9 eines Wälzlagers, insbesondere des Lagerkäfigs 9 eines Nadellagers, als Signalgeber 8 zur Erfassung der Drehung, insbesondere des Drehwinkels der Kurbelwelle 2 des Tretlagers. Es versteht sich, dass der Lagerkäfig 9 auch zur Erfassung der Drehung, insbesondere zur Erfassung des Drehwinkels einer anderen Welle in einer anderen Einbausituation vorgesehen sein kann.

### Bezugszeichenliste

- 1: Drehachse der Kurbelwelle 2
- 2: Kurbelwelle
- 3: Sensorvorrichtung
- 4: erstes Wälzlager
- 5: zweites Wälzlager
- 6: Rahmen
- 7: Sensor
- 8: Signalgeber
- 9: Lagerkäfig
- 10: erster Seitenring
- 11: zweiter Seitenring
- 12: äußere Mantelfläche
- 13: erste Klebelage
- 14: zweite Klebelage
- 15: Steg
- 16: erster axialer Abschnitt des Steges 15
- 17: zweiter axialer Abschnitt des Steges 15
- 18: dritter axialer Abschnitt des Steges 15
- 19: Zwischenabschnitt des Steges 15
- 20: Zwischenabschnitt des Steges 15
- 21: Abstandsscheibe

## Patentansprüche

1. Tretlager, umfassend
eine drehbar gelagerte Kurbelwelle (2), und
eine Sensorvorrichtung (3), die die Position der Kurbelwelle (2), insbesondere den Winkel der Kurbelwelle (2), erfasst,
wobei die Sensorvorrichtung (3) einen Sensor (7) und einen Signalgeber (8) umfasst,
**dadurch gekennzeichnet,**
**dass** der Signalgeber (8) einen drehfest an dem Korpus der Kurbelwelle (2) befestigten Lagerkäfig (9) eines Wälzlagers, insbesondere einen Lagerkäfig (9) eines Nadellagers, umfasst.

2. Tretlager nach Anspruch 1, **dadurch gekennzeichnet, dass** der Sensor (7) als magnetischer Sensor, insbesondere als Hall- oder Reed-Sensor, ausgebildet ist.

3. Tretlager nach Anspruch 2, **dadurch gekennzeichnet, dass** der magnetische Sensor (7) magnetisch vorgespannt ist.

4. Kurbelwelle für ein Tretlager, **gekennzeichnet durch** einen Lagerkäfig eines Wälzlagers, insbesondere einen Lagerkäfig eines Nadellagers, wobei der Lagerkäfig drehfest an dem Korpus der Kurbelwelle (2) befestigt ist.

5. Kurbelwelle nach Anspruch 4, **dadurch gekennzeichnet, dass** der Lagerkäfig (9) mit einem Seitenring (10, 11) an dem Korpus der Kurbelwelle (2) befestigt ist.

6. Kurbelwelle nach Anspruch 4 oder 5, **dadurch gekennzeichnet, dass** der Lagerkäfig (9) Stege (15) aufweist, und dass die Stege (15) einen radialen Abstand zu einer Mantelfläche (12) des Korpus der Kurbelwelle (2) aufweisen.

7. Verwendung eines Lagerkäfigs eines Wälzlagers, insbesondere eines Lagerkäfigs eines Nadellagers, als Signalgeber zur Erfassung der Drehung einer Welle, insbesondere des Drehwinkels einer Kurbelwelle (2) eines Tretlagers.
